# EUROPEAN PATENT APPLICATION

(11) **EP 4 813 619 A1**
(43) Date of publication of application: **30.09.2026**
(21) Application number: 23959529.1
(22) Date of filing: 22.11.2023
(51) Int. Cl.: B29D 35/08, B29D 35/14, B29D 35/06, B29K 75/00, B29K 69/00, B29K 21/00, B29K 33/04, B29K 23/00

(54) **COMPOSITE INJECTION-MOLDED SHOE AND METHOD FOR MANUFACTURING SAME**

(71) Applicant: Comtech Chemical Co., Ltd., Gimhae-si, Gyeongsangnam-do 50827 (KR)
(72) Inventor: LIM, Daehwi, Gimhae-si, Gyeongsangnam-do 50827 (KR); KWON, Min Ji, Gimhae-si, Gyeongsangnam-do 50827 (KR)
(74) Representative: Maiwald GmbH
(86) International application number: PCT/KR2023/018849
(87) International publication number: WO 2025/110272

(57) **Abstract**

Provided are a composite injection-molded shoe and a method for manufacturing same. The method for manufacturing a composite injection-molded shoe includes: i) providing a midsole that has been physically foamed and injection-molded in a mold; ii) inserting the midsole into another mold having an opening, so that the rear surface of the midsole is exposed upward through the opening; iii) providing a coalesced sole by injecting an outsole through the opening so as to be attached to the rear surface of the midsole; and iv) separating the coalesced sole from the another mold. In the providing a coalesced sole, liquid raw material for the outsole is pressurized to form perforations in a closed skin of the midsole that has been formed in the providing a midsole, penetrates into the midsole, and, by penetrating into a plurality of pores that are surrounded by the closed skin, melts the edges of the pores while being solidified.

## Description

### Technical Field

The present invention relates to a composite injection-molded shoe and a method for manufacturing the same. More particularly, the present invention relates to a shoe in which shoe components are composite injection-molded and a method for manufacturing the same.

### Background

In order to manufacture a shoe, an upper, a midsole, and an outsole are mainly required. The upper covers and protects the instep as an upper part of the shoe and maintains an exterior design and shape of the shoe. The midsole is an intermediate part between the upper and the outsole and has a cushioning function. The outsole forms the lowermost part of the shoe and is a part that touches the ground, having anti-slip and anti-wear functions.

Conventionally, a shoe was manufactured by bonding an upper, a midsole, and an outsole to each other through separate processes. A primer or an adhesive was used for mutual bonding of these components. In addition, to improve the adhesive strength of these components, the surfaces thereof were modified through UV treatment or preheated in an oven. Meanwhile, to simplify the process, these components were bonded to each other using a hot-melting film.

### DETAILED DESCRIPTION OF THE INVENTION

### Technical Problem

A shoe is provided in which shoe components are composite injection-molded. In addition, a method for manufacturing such a shoe is provided.

### Technical Solution

A method for manufacturing a composite injection-molded shoe according to an embodiment of the present invention includes the steps of: i) providing a physical foam injection-molded midsole in a mold; ii) inserting the midsole into another mold in which an opening is formed to expose a rear surface of the midsole upward through the opening; iii) providing an integrated sole in which an outsole is injected through the opening and attached to the rear surface of the midsole; and iv) separating the integrated sole from the other mold. In the providing the integrated sole, a raw material liquid for an outsole is pressurized to form a perforation in a closed-type skin of the midsole formed in the providing the midsole to penetrate into the midsole, and penetrates into a plurality of pores surrounded by the closed-type skin and solidifies while melting the surroundings thereof.

In the exposing the rear surface of the midsole upward, the other mold may include : i) a left mold part; and ii) a right mold part separable from the left mold part in a lateral direction thereof. The left mold part and the right mold part may be mutually coupled in a width direction thereof to form the opening. A depth of the opening may be greater than an average thickness of the midsole.

In the providing the midsole, the midsole may be manufactured from one or more resins selected from the group consisting of thermoplastic elastomer (TPE), thermoplastic polyurethane (TPU), thermoplastic copolyester elastomer (TPC-ET), polyether block amide (PEBA), polycarbonate (PC), and styrene-ethylene-butylene-styrene (SEBS). In the providing the integrated sole, the outsole may be manufactured from one or more resins selected from the group consisting of thermoplastic polyester elastomer (TPEE), thermoplastic elastomer (TPE), polyether block amide (PEBA), thermoplastic polyurethane (TPU), thermoplastic vulcanizates (TPV), and ethylene-vinyl acetate (EVA).

In the exposing the rear surface of the midsole, the rear surface may be surface-treated to increase surface roughness thereof. The surface roughness may be 10 µm to 1000 µm. In the exposing the rear surface of the midsole, the rear surface may be etched to form a plurality of protrusions on the rear surface. In the providing the midsole, the mold may include an upper mold part and a lower mold part, and the upper mold part and the lower mold part may be coupled to form a cavity. The step of providing the midsole may include i) providing a mixture in which a supercritical fluid is incorporated into a melt; ii) suctioning gas into the cavity to pressurize the cavity; iii) foaming the mixture in the cavity while injecting the mixture into the cavity; iv) depressurizing the cavity in a multi-stage after the injection of the mixture; and v) separating the upper mold part and the lower mold part from each other to remove the foamed midsole. In the foaming the mixture, an intake/exhaust passage surrounding the cavity may be formed in the lower mold part. A longitudinal length of the cavity is greater than a transverse length of the cavity perpendicularly crossing the longitudinal direction, and a plurality of intake/exhaust holes are respectively formed in the intake/exhaust passage located at both ends in the longitudinal direction, and the plurality of intake/exhaust holes may communicate with the cavity. An injection speed of the mixture in the foaming the mixture and a decompression speed of the cavity in the depressurizing the cavity in a multi-stage may be substantially identical to each other.

In the exposing the rear surface of the midsole upward through the opening, an area of the opening in contact with a lower surface of the other mold may be greater than a planar area of the midsole. Among the area of the opening, an area not shared with the planar area of the midsole may surround the planar area of the midsole.

A method for manufacturing a composite injection-molded shoe according to another embodiment of the present invention includes i) providing an upper comprising a bottom; ii) fixing the upper to a mold while covering an opening formed in the mold with the bottom; iii) providing an integrated sole in which a midsole is physical foam injection-molded into the mold to attach the bottom to the midsole; and iv) removing the integrated sole from the mold. In the providing the upper, the upper includes i) a plurality of yarn bundles; and ii) a plurality of polymer strings interwoven with the plurality of yarn bundles.

The plurality of yarn bundles are arranged side by side and spaced apart from each other, and the plurality of polymer strings cross the plurality of yarn bundles and may alternately pass through upper and lower parts of the plurality of yarn bundles, respectively. An average width of the plurality of yarn bundles may be greater than an average width of the plurality of polymer strings. The plurality of polymer strings include a pair of polymer strings twisted with each other, and two or more yarn bundles among the plurality of yarn bundles may be positioned therebetween while the pair of polymer strings are respectively positioned above and below each other. In the providing the upper, the upper may be formed by intermixing yarn and polymer through electrospinning.

In the providing the integrated sole, the mold may include an upper mold part and a lower mold part, and the upper mold part and the lower mold part may be coupled to form a cavity. The physical foam injection molding of the midsole into the mold may include i) providing a mixture in which a supercritical fluid is incorporated into a melt; ii) suctioning gas into the cavity to pressurize the cavity; iii) foaming the mixture in the cavity while injecting the mixture into the cavity; iv) depressurizing the cavity in a multi-stage after the injection of the mixture; and v) separating the upper mold part and the lower mold part from each other to remove the foamed midsole.

In the foaming the mixture, an intake/exhaust passage surrounding the cavity may be formed in the lower mold part. A longitudinal length of the cavity is greater than a transverse length of the cavity perpendicularly crossing the longitudinal direction, and a plurality of intake/exhaust holes are respectively formed in the intake/exhaust passage located at both ends in the longitudinal direction, and the plurality of intake/exhaust holes may communicate with the cavity. An injection speed of the mixture in the foaming the mixture and a decompression speed of the cavity in the depressurizing the cavity in a multi-stage may be substantially identical to each other.

In the providing the integrated sole, an injection speed of the raw material liquid for an outsole may be 30mm/sec to 200mm/sec. In the providing the integrated sole, an injection pressure of the raw material liquid for an outsole may be 30MPa to 300MPa. In the providing the integrated sole, an injection temperature of the raw material liquid for an outsole may be 100°C to 250°C.

A composite injection-molded shoe according to an embodiment of the present invention includes i) an upper including a bottom; and ii) a midsole attached to the bottom. The upper includes: i) a plurality of yarn bundles arranged side by side and spaced apart from each other; and ii) a plurality of polymer strings crossing the plurality of yarn bundles and interwoven with the plurality of yarn bundles while alternately passing through upper and lower parts of the plurality of yarn bundles, respectively. An average width of the plurality of yarn bundles is greater than an average width of the plurality of polymer strings. The plurality of polymer strings include a pair of polymer strings twisted with each other, and two or more yarn bundles among the plurality of yarn bundles are positioned therebetween while the pair of polymer strings are respectively positioned above and below each other.

### Advantageous Effects

The manufacturing process of a shoe can be simplified by simultaneously molding the upper, midsole, and outsole of the shoe. In addition, the upper and the midsole may be simultaneously molded, or the midsole and the outsole may be simultaneously molded. As a result, the manufacturing cost and manufacturing time of the shoe can be significantly reduced. In addition, the recycling rate of the shoe can be increased. Additional processes such as the use of chemical substances for bonding and a four-way compression process are unnecessary. Accordingly, a composite injection-molded shoe with improved adhesive strength can be manufactured by making the upper, midsole, and outsole closely adhere to each other uniformly and strongly.

### BRIEF DESCRIPTION OF THE DRAWINGS

FIG. 1 is a schematic flowchart of a method for manufacturing a composite injection-molded shoe according to a first embodiment of the present invention.
FIGs. 2 to 8 are schematic diagrams showing respective steps of the method for manufacturing a composite injection-molded shoe of FIG. 1.
FIG. 9 is a schematic flowchart of a method for manufacturing a composite injection-molded shoe according to a second embodiment of the present invention.
FIGs. 10 to 14 are schematic diagrams showing respective steps of the method for manufacturing a composite injection-molded shoe of FIG. 8.
FIGs. 15 to 17 are photographs according to Experimental Example 1 of the present invention.
FIGs. 18 and 19 are photographs according to Experimental Example 3 of the present invention.

### BEST FORM FOR PRACTICING THE INVENTION

The terminology used herein is for the purpose of referring to specific embodiments only and is not intended to limit the present invention. As used herein, singular forms include plural forms unless the context clearly indicates otherwise. The meaning of "comprising" used in the specification specifies a specific characteristic, area, integer, step, operation, element, and/or component, and does not exclude the presence or addition of another specific characteristic, area, integer, step, operation, element, component, and/or group.

Unless otherwise defined, all terms including technical and scientific terms used herein have the same meaning as commonly understood by one of ordinary skill in the art to which this invention belongs. Terms defined in commonly used dictionaries are further interpreted as having meanings consistent with the relevant technical literature and the currently disclosed content, and are not interpreted in an ideal or very formal sense unless defined.

The term composite foam-molded body used hereinafter refers to a component in which a plurality of pores are formed therein by a foaming process. In addition, foaming is interpreted to include both physical foaming or chemical foaming.

Hereinafter, embodiments of the present invention will be described in detail with reference to the accompanying drawings so that those skilled in the art can easily practice the same. However, the present invention may be implemented in many different forms and is not limited to the embodiments described herein.

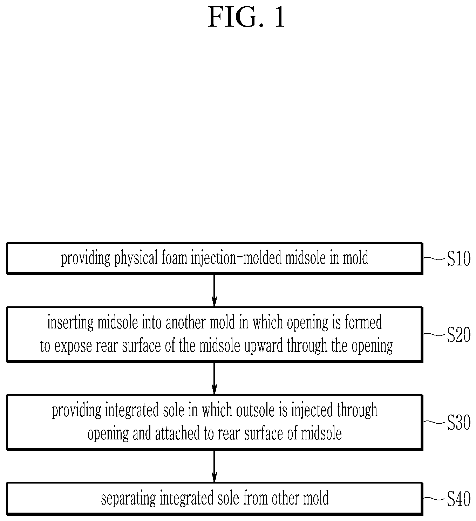

FIG. 1 schematically shows a flowchart of a method for manufacturing a composite injection-molded shoe according to a first embodiment of the present invention. The method for manufacturing a composite injection-molded shoe of FIG. 1 is merely for illustrating the present invention, and the present invention is not limited thereto. Accordingly, the method for manufacturing a composite injection-molded shoe may be modified into other forms.

As shown in FIG. 1, the method for manufacturing a composite injection-molded shoe includes the steps of providing a physical foam injection-molded midsole in a mold S10, inserting the midsole into another mold in which an opening is formed to expose a rear surface of the midsole upward through the opening S20, providing an integrated sole in which an outsole is injected through the opening and attached to the rear surface of the midsole S30, and separating the integrated sole from the other mold S40. In addition, the method for manufacturing a composite injection-molded shoe may further include other steps.

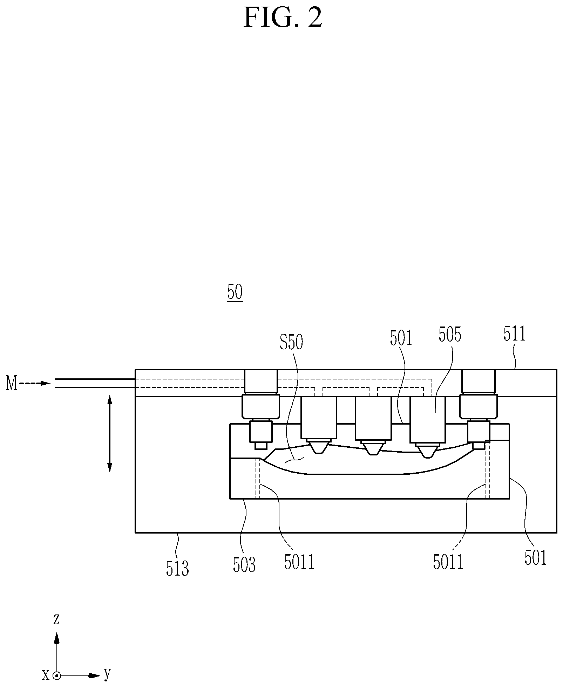

First, in step S10, a physical foam injection-molded midsole in a mold is provided. A process of manufacturing such a midsole will be described in more detail below with reference to FIGs. 2 to 4.

FIG. 2 schematically shows a side structure of a mold 50 used in the step S10. The structure of the mold 50 of FIG. 2 is merely for illustrating the present invention, and the present invention is not limited thereto. Accordingly, the structure of the mold 50 may be modified into other forms.

As shown in FIG. 2, the mold 50 comprises an upper mold part 501 and a lower mold part 503, which are cores. The upper mold part 501 and the lower mold part 503 are stably placed and positioned in an upper support 511 and a lower support 513, respectively. The lower support 513 may move up and down along an arrow direction, i.e., z-axis direction.

The mold 50 is preheated to 10°C to 80°C in order to efficiently foam a mixture M in which a resin and a physical foaming agent are mixed as a raw material for the midsole. When the heating temperature of the mold 50 is too low, it is unfavorable for the foaming of the mixture M. Also, when the heating temperature of the mold 50 is too high, the mixture M may be overheated and the lead time may be lengthened. Therefore, the heating temperature of the mold 50 is maintained within the above-mentioned range. Meanwhile, the temperature of the mold 50 may be set below room temperature to improve the surface of the foam or to control the thickness of a closed skin layer formed on the surface thereof. Meanwhile, as the resin, thermoplastic elastomer (TPE), thermoplastic polyurethane (TPU), thermoplastic copolyester elastomer (TPC-ET), polyether block amide (PEBA), polycarbonate (PC), or styrene-ethylene-butylene-styrene (SEBS) may be used. As the physical foaming agent, nitrogen or carbon dioxide may be used.

Injection gates 505 are coupled to the upper mold part 501. The mixture M flowing in an arrow direction is injected into a cavity S50 through the injection gates 505 and foamed. The injection gates 505 are arranged along a y-axis direction, i.e., a longitudinal direction of the cavity S50. Since the midsole is formed in a shape extending long in the y-axis direction, three injection gates 505 should be arranged in the y-axis direction to quickly manufacture the midsole. Among the injection gates 505, there may exist one or more time periods during which a step of injecting the mixture M and a step of delaying the injection of the mixture M are performed differently for each injection gate 505. For example, multi-stage injection is possible by adjusting the delay time and operation time of each injection gate 505. As a result, multi-stage injection using the injection gates 505 is possible, enabling the manufacturing of a low-density member in which foaming is performed uniformly and well.

A cavity S50 in which the midsole can be foam injection-molded is formed in the lower mold part 503. The mixture M is injected through the injection gates 505 arranged along the y-axis direction, and gas is intake or exhausted through an intake/exhaust pipe 5011. The mold 50 may be operated by a hydraulic system, an electric system, or a hybrid hydraulic/electric system.

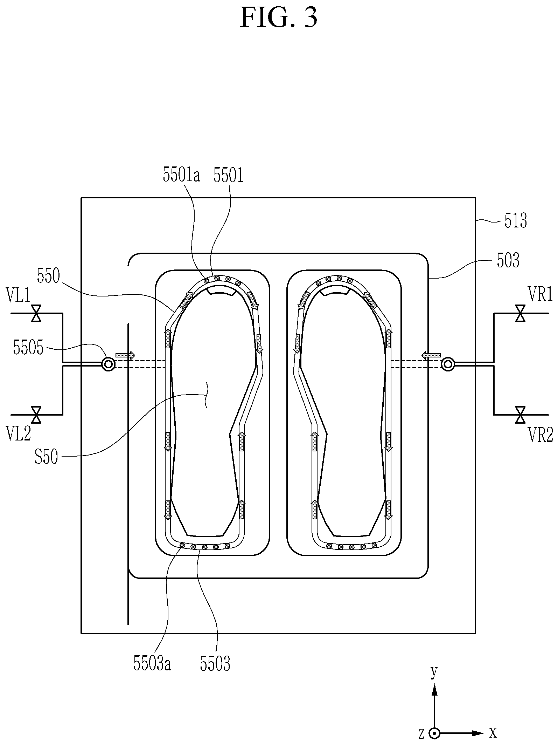

FIG. 3 schematically shows a state in which gas is suctioned into the cavity S50 formed by coupling the upper mold part and the lower mold part to pressurize the cavity. FIG. 3 shows a state viewed from above in an upper plane of the lower mold part 503 of FIG. 2, i.e., in an xy-plane direction, rotated by 90° for convenience. In FIG. 3, a length in a transverse direction refers to a length in a direction parallel to the x-axis while a length in a longitudinal direction refers to a length in a direction parallel to the y-axis.

As shown in FIG. 3, an intake/exhaust passage 550 surrounding the cavity S50 is formed in the lower mold part 503. As indicated by arrows, gas flows into the cavity S50 while rotating around the cavity S50 to pressurize the cavity S50. In this case, the cavity S50 is pressurized to 5 bar to 60 bar. The pressure of the cavity S50 is maintained within the above-mentioned range so that the mixture is appropriately foamed.

An external outlet 5505 is formed in the lower mold part 503 to allow gas to flow into or to exhaust gas from the intake/exhaust passage 550. Both ends of the intake/exhaust passage 550 along the longitudinal direction of the cavity S50, i.e., the y-axis direction, include an upper end 5501 and a lower end 5503, respectively. Intake/exhaust holes 5501a are formed in the upper end 5501 to communicate with the cavity S50. In addition, intake/exhaust holes 5503a are formed in the lower end 5503 to communicate with the cavity S50. An upper part of the midsole manufactured by foaming in the cavity S50 is formed thinner than a lower part thereof. Since the foaming of the mixture injected into the cavity S50 is induced according to the exhaustion of gas, an intake pressure is increased to form the lower part thick. Accordingly, the number of the intake/exhaust holes 5503a at the lower end 5503 is set to five, and the number of the intake/exhaust holes 5501a at the upper end 5501 is set to four, so that the number of the intake/exhaust holes 5503a is adjusted to be greater than the number of the intake/exhaust holes 5501a. As a result, an exhaust pressure through the intake/exhaust holes 5503a is greater than an exhaust pressure through the intake/exhaust holes 5501a, so that a midsole having a shape in which a lower part is thicker than an upper part can be manufactured.

Intake/exhaust is performed through valves VL1, VL2, VR1, and VR2. The valves VL1, VL2, VR1, and VR2 are connected to an intake/exhaust passage 5503 corresponding to the longitudinal length of the cavity S50. Therefore, intake/exhaust of the cavity S50 is possible while uniformly maintaining the pressure distribution in the cavity S50.

As shown in FIG. 3, two valves on each of left and right sides are communicated with the external outlet 5505. During exhaustion, the pressure in the cavity S50 may be adjusted by first opening the valves VL1 and VR1 and then opening the valves VL2 and VR2. That is, the valves VL2 and VR2 may be opened 0.5 seconds to 1 second after the valves VL1 and VR1 are first opened. Therefore, a midsole in which foaming is performed uniformly can be manufactured through a stable injection process.

An opening degree of the valves VL1 and VR1 may be smaller than an opening degree of the valves VL2 and VR2. That is, when the pressure in the cavity S50 is suddenly reduced, the injection quality may become non-uniform. Therefore, the opening degree of the valves VL1 and VR1 is adjusted to be relatively small, while the opening degree of the valves VL2 and VR2 is adjusted to be relatively large. Here, the opening degree refers to a ratio of a partially opened area to a 100% opened area of the valves. The opening degree of the valves VL1 and VR1 may be 20% to 40%. In addition, the opening degree of the valves VL2 and VR2 may be 50% to 70%. In this way, by adjusting the opening degree of the valves VL1, VR1, VL2, and VR2, it is possible to manufacture a low-density member in which foaming is performed uniformly and well.

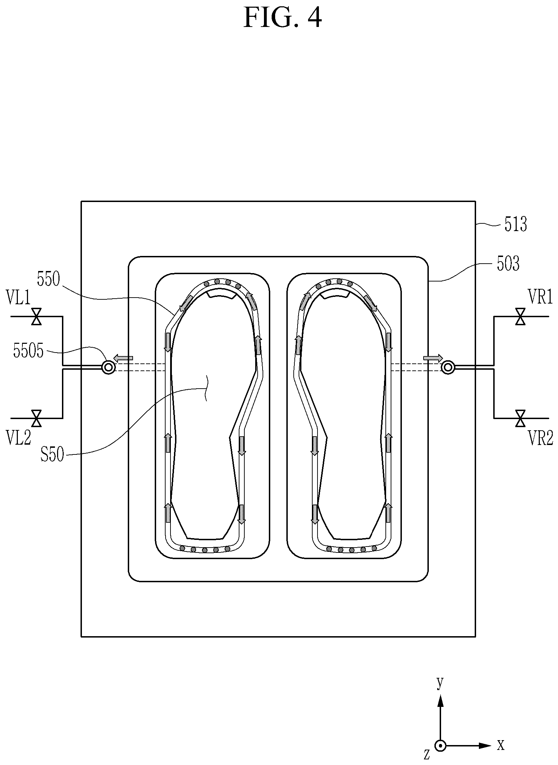

FIG. 4 schematically shows a state in which the mixture is foamed while being injected into a cavity. The mixture M shown in FIG. 2 (hereinafter the same) begins to be injected through the injection gates 505 shown in FIG. 2. The mixture M is injected at three sites arranged along the longitudinal direction of each cavity S50. The mixture M may be injected into the cavity S50 at a pressure of 3MPa to 300MPa. When the injection pressure is too low, the mixture M may not flow in well. In addition, the injection pressure cannot be too high due to process design.

Meanwhile, the decompression in the cavity S50 and the injection of the mixture M may be performed simultaneously. Alternatively, the decompression of the cavity S50 may be performed after the injection of the mixture M is performed. For example, the cavity S50 may be pressurized to 10bar to 50bar and then decompressed. More preferably, the cavity S50 may be pressurized to 10bar to 20bar. When the pressing force is too high or too low, it may be difficult to obtain an appropriate back pressure optimized for the foaming of the mixture M. Therefore, the pressing force of the cavity S50 is maintained within the above-mentioned range. A reduction amount of the injection pressure of the mixture M over time during injection of the mixture M and an exhaust amount of gas over time in the exhausting gas may be substantially identical to each other. As a result, a midsole with uniform quality can be manufactured.

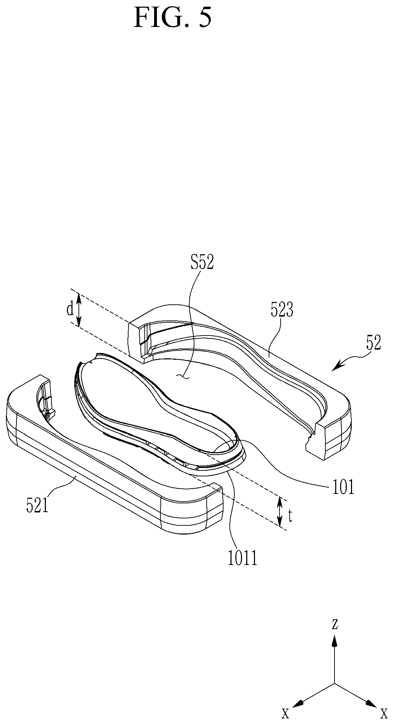

Returning to FIG. 1, in the step S20, the midsole 101 is inserted into another mold 52 in which an opening is formed to expose a lower surface 1011 of the midsole 101 upward through the opening. This will be described in detail with reference to FIG. 5.

FIG. 5 schematically shows a state in which the midsole 101 is coupled to the mold 52. FIG. 5 is merely for illustrating the present invention, and the present invention is not limited thereto. Accordingly, this may be modified differently.

As shown in FIG. 5, the mold 52 comprises a left mold part 521 and a right mold part 523. The right mold part 523 is separable from the left mold part 521 in an x-axis direction, i.e., a lateral direction. The left mold part 521 and the right mold part 523 are positioned on sides of the midsole 101 and are mutually coupled in a width direction thereof to form an opening S52. The left mold part 521 and the right mold part 523 are reusable. The left mold part 521 and the right mold part 523 are engaged with each other to form the opening S52, and the midsole 101 is positioned in the opening S52. The left mold part 521 and the right mold part 523 are positioned while completely surrounding the midsole 101.

A depth d of the opening S52 is greater than an average thickness t of the midsole 101. Accordingly, a space is formed below the rear surface 1011 of the midsole 101. An outsole is injection-molded in this space. Although not shown in FIG. 5, since the left mold part 521 and the right mold part 523 are positioned on the sides of the integrated sole, an undercut shape or a long-hole shape may be easily formed on the outsole by processing internal shapes thereof.

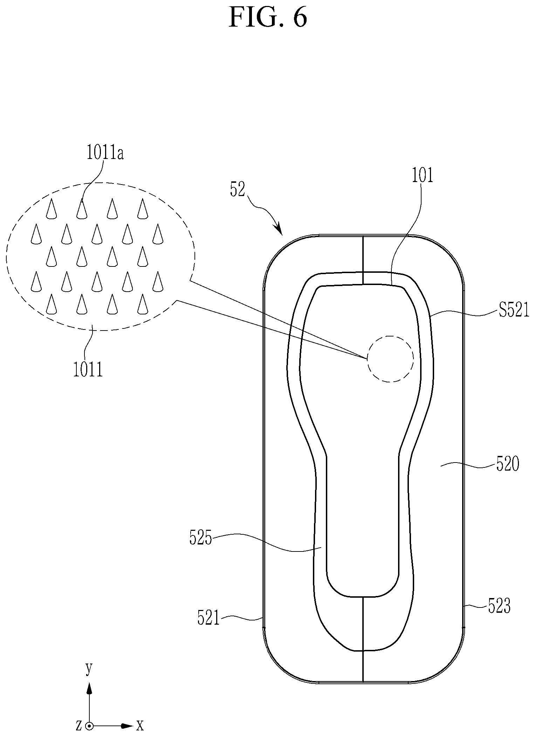

FIG. 6 schematically shows a partial rear structure of the mold 52 of FIG. 5. That is, FIG. 6 shows a state in which the left mold part 521 and the right mold part 523 are respectively coupled on both sides of the midsole 101 of FIG. 5 and turned upside down by 180°. In an enlarged circle of FIG. 6, the rear surface 1011 of the midsole 101 is enlarged and schematically shown. The partial rear structure of the mold 52 of FIG. 6 is merely for illustrating the present invention, and the present invention is not limited thereto. Accordingly, the partial rear structure of the mold 52 may be modified differently.

As shown in FIG. 6, an area of the opening S521 in contact with the lower surface 520 of the mold 52 is greater than a planar area of the midsole 101. The opening S521 refers to a planar space positioned on the same plane as the lower surface 520 of the mold 52. An extended part 525 is formed to extend along the edge thereof from the space where the midsole 101 is positioned. When injection-molding an outsole on the midsole 101, since the outsole is collected on the midsole 101 due to the extended part 525, the adhesive strength between the midsole 101 and the outsole can be further increased. The extended part 525 surrounds the planar area of the midsole 101, thereby forming an area of the opening S521 that is not shared with the planar area of the midsole 101. This non-shared area is positioned surrounding the planar area of the midsole 101.

In an embodiment of the present invention, an outsole which is injection-molded in a solid phase is bonded to the foam-molded midsole 101. This is contrary to a conventional method in which a pre-manufactured outsole or support is inserted into a mold and then a midsole is foam-injected to surround it. Since the outsole has a high density and a continuous molecular structure, a large amount of energy is required for remelting the solidified outsole. That is, when the midsole is injection-molded after inserting the outsole molded in a solid phase into a cavity of a mold, the adhesive strength between the midsole and the outsole could be improved only when a mixture melts and is fusion-bonded to the surface of the outsole. However, due to these characteristics of the outsole, the adhesion strength between the midsole and the outsole was low. In particular, since many pores exist in the midsole due to injection molding, the contact area with the outsole is small and the heat transfer performance according to injection molding is also not good, so that the contact surface with the outsole could not be sufficiently melted. In contrast, in an embodiment of the present invention, since the outsole is injection-molded on the midsole, the above-mentioned problems can be solved.

Meanwhile, as shown in an enlarged circle of FIG. 6, protrusions 1011a may be formed as an auxiliary means for further improving the adhesive strength between the midsole 101 and the outsole. The protrusions 1011a are formed on the rear surface 1011 of the midsole 101. These protrusions 1011a are formed before coupling the midsole 101 to the mold 52. For example, the protrusions 1011a may be formed by masking only portions of the rear surface 1011 of the midsole 101 where the protrusions 1011a are to be located and then etching the rear surface 1011 with an etching solution for resin. The protrusions 1011a anchor the outsole injection-molded on the midsole 101 to further increase the adhesive strength between the midsole 101 and the outsole. Since an etching process for forming the protrusions 1011a can be easily devised by those of ordinary skill in the art, a detailed description thereof will be omitted.

Meanwhile, instead of forming the protrusions 1011a, the rear surface 1011 of the midsole 101 may be surface-treated to increase surface roughness thereof. In this case, the surface roughness may be 10 µm to 1000 µm. More preferably, the surface roughness may be 10 µm to 500 µm. When the surface roughness is too high, the surface adhesion strength between the midsole 101 and the outsole may be too low. Also, when the surface roughness is too low, the surface treatment process may be unnecessary. Therefore, it is preferable to maintain the surface roughness of the rear surface 1011 within the above-mentioned range.

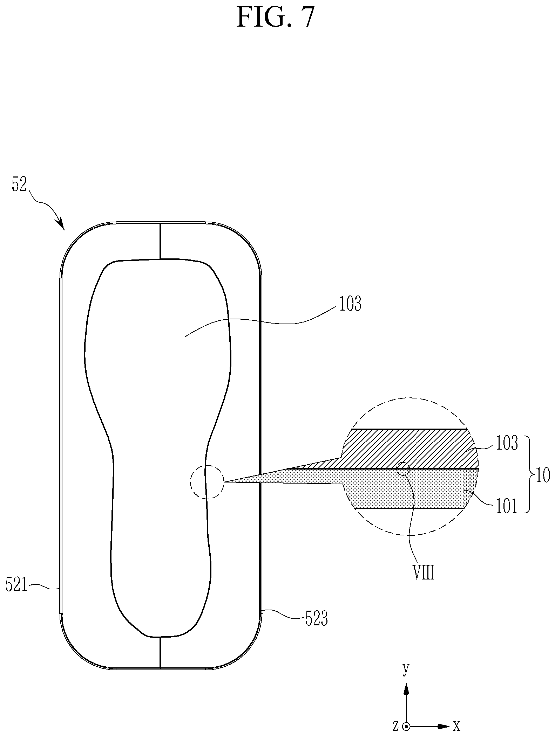

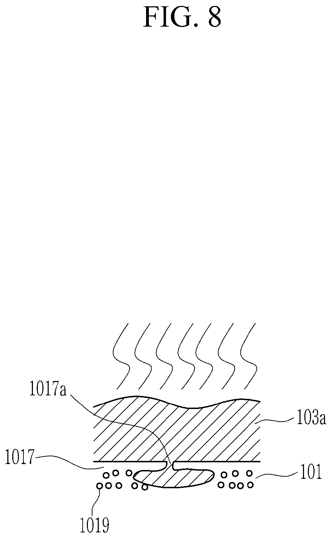

Returning to FIG. 1, in the step S30, an integrated sole in which an outsole is injected through the opening and attached to the rear surface of the midsole is provided. This will be described in more detail with reference to FIGs. 7 and 8.

FIG. 7 schematically shows a state in which the outsole 103 is injection-molded into the mold 52 of FIG. 6. In an enlarged circle of FIG. 7, a cross-sectional structure of an integrated sole 10 in which the outsole 103 is attached to the midsole 101 is schematically shown. The injection molding state of the outsole 103 in FIG. 7 is merely for illustrating the present invention, and the present invention is not limited thereto. Accordingly, this may be modified differently.

As shown in FIG. 7, the outsole 103 is injected into the opening surrounded by the left mold part 521 and the right mold part 523. The outsole 103 is attached to the midsole 101 to form the integrated sole 10. That is, a shoe component in which the midsole 101 and the outsole 103 are integrated can be manufactured without using an adhesive.

As shown in the enlarged circle of FIG. 7, the outsole 103 is formed on the midsole 101. Since the outsole 103 is firmly fusion-bonded and coupled to the midsole 101, it has high adhesive strength.

The outsole 103 may be manufactured from a thermoplastic resin. For example, the outsole 103 may be manufactured from a material having abrasion resistance such as thermoplastic polyester elastomer (TPEE), thermoplastic elastomer (TPE), polyether block amide (PEBA), thermoplastic polyurethane (TPU), thermoplastic vulcanizates (TPV), or ethylene-vinyl acetate (EVA).

FIG. 8 schematically shows a state in which the raw material liquid for an outsole 103a in part VIII of FIG. 7 is melt-bonded to the midsole 101. The melt-bonded state of the raw material liquid for an outsole 103a in FIG. 8 is merely for illustrating the present invention, and the invention is not limited thereto. Accordingly, this may be modified differently.

As shown in FIG. 8, the midsole 101 is formed by physical foam injection molding in a mold at room temperature. Accordingly, a closed-type skin 1017 is formed on an outer surface of the midsole 101 by rapid cooling due to contact with the mold. A plurality of pores 1019 are formed on an inner surface of the midsole 101 by foaming. That is, the plurality of pores 1019 are surrounded by the closed-type skin 1017. The raw material liquid for an outsole 103a is injected onto the midsole 101. Since the raw material liquid for an outsole 103a is pressurized, injected at a high speed, and is in a hot state, the raw material liquid for an outsole 103a partially forms a perforation 1017a in the closed-type skin 1017 and penetrates into the midsole 101. As a result, the raw material liquid for an outsole 103a also penetrates into the pores 1019 and solidifies as the temperature drops while melting the surroundings thereof. A width of the raw material liquid for an outsole 103a solidified through the perforation 1017a is greater than a width of the perforation 1017a. Therefore, a structure in which the outsole 103 shown in FIG. 7 is anchored to the midsole 101 is formed. In this way, since the outsole 103 is melt-integrated with the midsole 101, the adhesive strength between the outsole 103 and the midsole 101 is very excellent.

For this purpose, an injection speed of the raw material liquid for an outsole may be 30mm/sec to 200mm/sec. If the injection speed of the raw material liquid for an outsole is too low, the molding of the outsole may be incomplete. Also, if the injection speed of the raw material liquid for an outsole is too high, a molten liquid for an outsole having high heat in a short period of time may be injected to partially deform the midsole. Accordingly, the injection speed of the raw material liquid for an outsole is adjusted within the above-mentioned range.

In addition, an injection temperature of the raw material liquid for an outsole may be 100°C to 250°C. More preferably, the injection temperature of the raw material liquid for an outsole may be 150°C to 250°C. If the injection temperature of the raw material liquid for an outsole is too low, it may not bond well with the midsole. Also, if the injection temperature of the raw material liquid for an outsole is too high, the midsole may deteriorate. Therefore, the injection temperature of the raw material liquid for an outsole is maintained within the above-mentioned range.

In addition, an injection pressure of the raw material liquid for an outsole may be 30MPa to 300MPa. More preferably, the injection pressure of the raw material liquid for an outsole may be 50MPa to 200MPa. If the injection pressure of the raw material liquid for an outsole is too low, the molding of the outsole may be incomplete. Also, if the injection pressure of the raw material liquid for an outsole is too high, the midsole may deform. Therefore, the injection pressure of the raw material liquid for an outsole is adjusted within the above-mentioned range.

Returning to FIG. 1, finally, in the step S40, the integrated sole is separated from the other mold. As a result, an integrated sole formed integrally with the midsole and the outsole can be obtained.

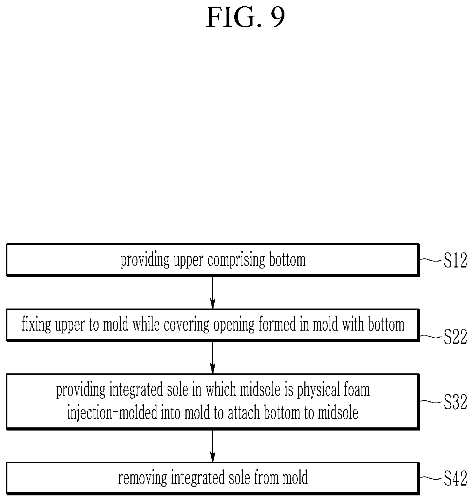

FIG. 9 schematically shows a flowchart of a method for manufacturing a composite injection-molded shoe according to a second embodiment of the present invention. The method for manufacturing a composite injection-molded shoe of FIG. 9 is merely for illustrating the present invention, and the present invention is not limited thereto. Accordingly, the method for manufacturing a composite injection-molded shoe may be modified into other forms. Since the method for manufacturing a composite injection-molded shoe of FIG. 9 is similar to the method for manufacturing a composite injection-molded shoe of FIG. 1, the same reference numerals are used for the same parts, and detailed descriptions thereof are omitted.

As shown in FIG. 9, the method for manufacturing a composite injection-molded shoe includes steps of providing an upper comprising a bottom S12, fixing the upper to a mold while covering an opening formed in the mold with the bottom S22, providing an integrated sole in which a midsole is physical foam injection-molded into the mold to attach the bottom to the midsole S32, and removing the integrated sole from the mold S42. In addition, the method for manufacturing a composite injection-molded shoe may further comprise other steps.

First, in the step S12, an upper including a bottom is provided. The upper is manufactured into an integrated sole attached onto the midsole in a subsequent process.

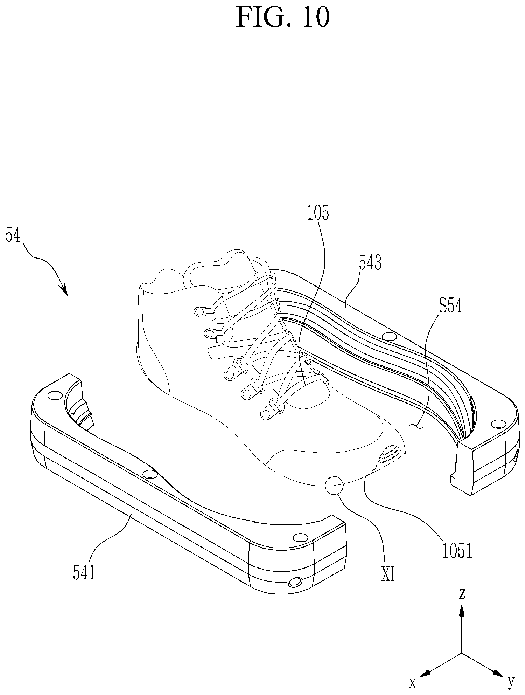

Next, in the step S22, the upper is fixed to the mold while covering the opening formed in the mold with the bottom. This method is used to complete operations for physical foam injection molding of the midsole. This will be described in more detail with reference to FIG. 10.

FIG. 10 schematically shows a state in which the upper 105 is coupled to the mold 54. FIG. 10 is merely for illustrating the present invention, and the present invention is not limited thereto. Accordingly, this may be modified differently.

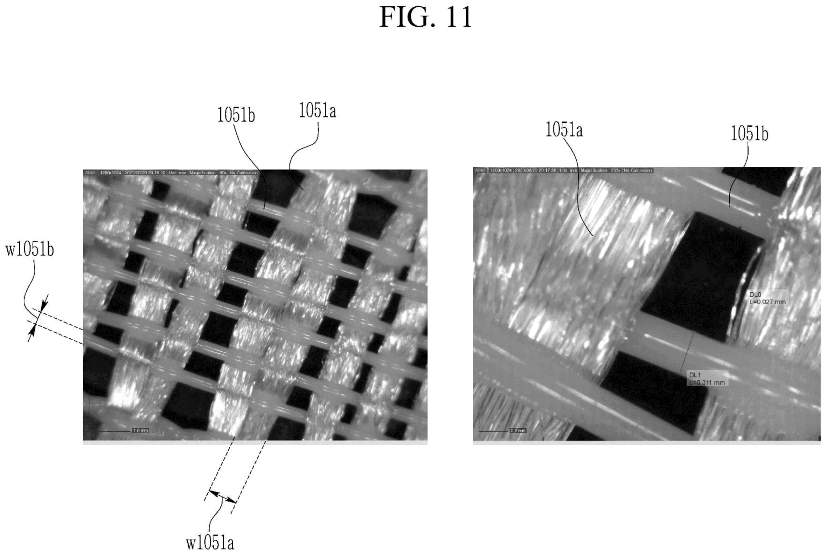

As shown in FIG. 10, the mold 54 includes a left mold part 541 and a right mold part 543. The right mold part 543 is separable from the left mold part 541 in an x-axis direction, i.e., a lateral direction. The left mold part 521 and the right mold part 523 are positioned on sides of the upper 105 and are mutually coupled in a width direction thereof to form an opening 54S. The left mold part 541 and the right mold part 543 are reusable. The left mold part 541 and the right mold part 543 are engaged with each other to form the opening S54, and the upper 105 is positioned in the opening S54. Therefore, the left mold part 541 and the right mold part 543 are positioned while completely surrounding the bottom 1051 of the upper 105. The bottom 1051 of the upper 105 faces downward where the midsole is physical foam injection-molded in a subsequent process. The integrated sole can be manufactured by rotating the mold 54 of FIG. 10 by 180° about the x-axis to turn it upside down and performing physical foam injection molding of the midsole onto the bottom 1051 of the upper 105. Meanwhile, by modifying the material of the bottom 1051 of the upper 105, the upper 105 is well-attached to the midsole that is physical foam injection-molded in a subsequent process. This will be described in more detail with reference to FIGs. 11 to 13.

FIGs. 11 to 13 show various examples of a texture of the bottom 1051 of the upper 105 of FIG. 10 in an enlarged and schematic manner. FIGs. 11 to 13 are merely for illustrating the present invention, and the present invention is not limited thereto. Accordingly, the texture of the bottom 1051 of the upper 105 may be modified differently.

FIG. 11 illustrates a woven state in which yarn bundles 1051a and polymer strings 1051b are crossed. A photograph on the left of FIG. 11 shows such a woven fabric enlarged by 60 times, and a photograph on the right of FIG. 11 shows such a woven fabric enlarged by 205 times.

As shown in FIG. 11, the yarn bundles 1051a are arranged side by side and spaced apart from each other. A single yarn is very thin, so they are bundled together to form a bundle, thereby increasing the surface area and improving the penetration power of a midsole foam in contact therewith. Since the yarn has elasticity, it is suitable for use as a material for the upper 105. As the yarn, a fusible yarn may be used.

Meanwhile, the polymer string 1051b is manufactured by elongating and drawing a polymer material. Since a manufacturing process of such a polymer string 1051b can be easily understood by those of ordinary skill in the art, a detailed description thereof will be omitted.

As a material for the polymer strings 1051b, thermoplastic polyester elastomer (TPE), thermoplastic polyurethane (TPU), thermoplastic copolyester elastomer (TPC-ET), or polyether block amide (PEBA) may be used. These polymer materials are also used as raw materials for midsoles. Accordingly, by using a material that is consistent with the midsole raw material and has high compatibility, the adhesion strength thereof can be further increased.

As shown in FIG. 11, the polymer strings 1051b are positioned crossing the yarn bundles 1051a. Since the upper 105 is formed in a woven fabric form, the yarn bundles 1051a and the polymer strings 1051b are formed spaced apart in an interwoven state. More specifically, the polymer strings 1051b are provided interwoven with the yarn bundles 1051a while alternately passing through upper and lower parts of the yarn bundles 1051a, respectively. When the structure of the weave pattern is too firm or woven with a high density, the mixture for manufacturing a midsole may contact only the bottom, but in the above-mentioned pattern, foaming also occurs in spaces existing between the polymer strings 1051b and the yarn bundles 1051a, thereby improving adhesive strength.

Meanwhile, an average width w1051a of the yarn bundle is greater than an average width w1051b of the polymer string 1051b. That is, the elasticity of the upper 105 can be increased by forming the yarn bundles 1051a thick. That is, the polymer string 1051b, which has relatively lower elasticity than the yarn bundles 1051a, can have the average width w1051b made small to secure the elasticity of the upper 105. The polymer string 1051b facilitates attachment to the midsole. Furthermore, since the foam-molded midsole penetrates between the yarn bundles 1051a and the polymer strings 1051b, the attachment strength between the upper 105 and the midsole can be further improved.

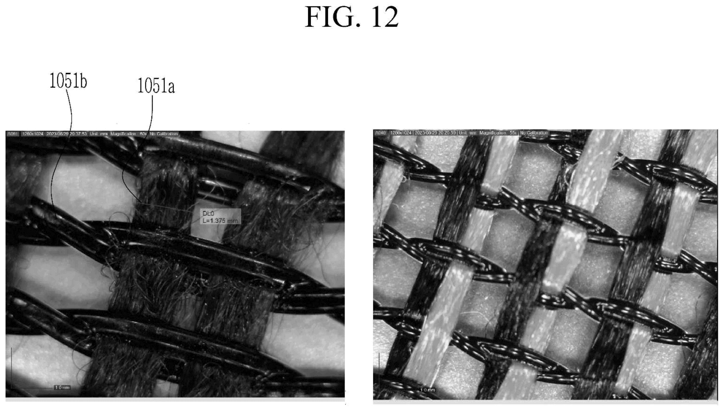

FIG. 12 illustrates another woven state in which yarn bundles 1051a and polymer strings 1051b are crossed. A photograph on the left of FIG. 12 shows such a woven fabric enlarged by 60 times, and a photograph on the right of FIG. 12 shows such a woven fabric enlarged by 200 times. Since FIG. 12 is similar to FIG. 11, the same reference numerals are used for the same parts, and detailed descriptions thereof are omitted.

As shown in FIG. 12, a pair of polymer strings 1051b are formed twisted with each other. Two or more yarn bundles 1051a are positioned between the pair of polymer strings 1051b alternately positioned above and below. As a result, since the yarn bundles 1051a can be stably fixed between the pair of polymer strings 1051b, the durability of the upper 105 shown in FIG. 10 can be further improved.

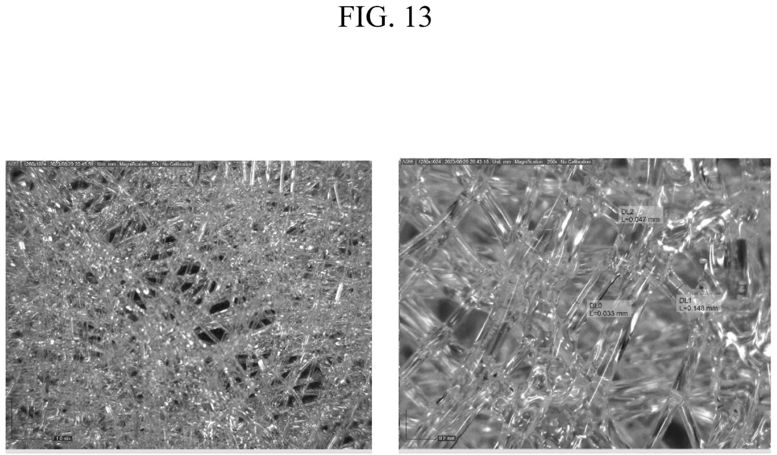

FIG. 13 illustrates another state in which yarn and polymer are intermixed through electrospinning. A photograph on the left of FIG. 13 shows such a fabric enlarged by 55 times, and a photograph on the right of FIG. 13 shows such a fabric enlarged by 205 times. Since the material of the upper in FIG. 13 is the same as the material of the upper in FIGs. 11 and 12, a detailed description thereof will be omitted.

As shown in FIG. 13, a non-woven fabric in which yarn and polymer are randomly formed by electrospinning may be used as a material for the upper 105 shown in FIG. 10. Since an electrospinning method can be easily understood by those of ordinary skill in the art, a detailed description thereof will be omitted.

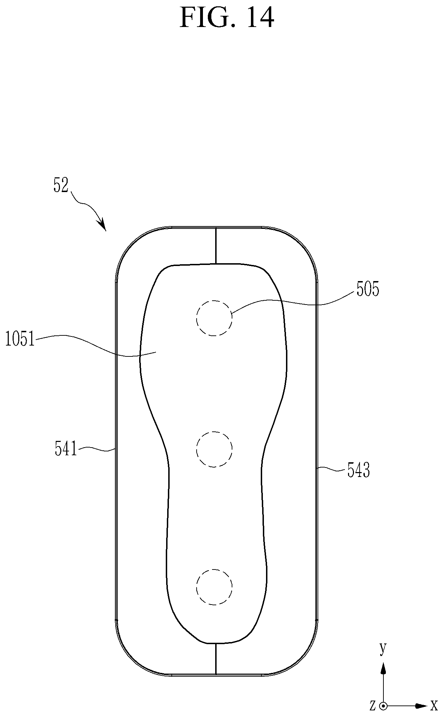

Returning to FIG. 9, in the step S32, an integrated sole is provided by physical foam injection-molding a midsole into a mold to attach the bottom to the midsole. This will be described in detail with reference to FIG. 14.

FIG. 14 schematically shows a partial rear structure of the mold 54 of FIG. 10. That is, FIG. 14 shows a state in which the left mold part 541 and the right mold part 543 are respectively coupled on both sides of the upper 105 of FIG. 10 and turned upside down. The partial rear structure of the mold 54 of FIG. 14 is merely for illustrating the present invention, and the present invention is not limited thereto. Accordingly, the partial rear structure of the mold 54 may be modified differently.

As shown in FIG. 14, a mixture for manufacturing a midsole is physical foam injection-molded from three injection gates 505 onto the bottom 1051 of the upper 105. To provide uniform adhesive strength over the entire adhesion area between the upper 105 and the midsole, three injection gates 505 arranged side by side in a longitudinal direction of the shoe are used.

A physical foaming injection process may be performed by inserting the mold 54 as a core into the mold 50 of FIG. 2. That is, since the upper 105 is fixed to the mold 54, the bottom 1051 is exposed upward with the upper 105 facing downward. The midsole is physical foam injection-molded on the bottom 1051. Since a physical foaming injection process comprising this is similar to the physical foaming injection process in the step S10 of FIG. 1, a detailed description thereof will be omitted. Remaining detailed processes can be easily understood by those of ordinary skill in the art, so detailed descriptions thereof will be omitted.

Conventionally, to fix an injection-molded product to a mold, a rim was formed or a film having an area larger than a cavity was used, so a process of trimming edges of an integrated sole after molding was essential. Furthermore, since a large amount of raw material relative to the cavity was used to maintain pressure during molding of the midsole, flash occurred due to overflow. Also, since the upper and the midsole had to be bonded using an adhesive, there were limitations in designs allowing for simultaneous molding of the upper and the midsole. In contrast, in the second embodiment of the present invention, the above-mentioned problems can be resolved through the above-described process.

Hereinafter, the present invention will be described in detail through experimental examples. These experimental examples are merely for illustrating the present invention, and the present invention is not limited thereto.

### Experiment on manufacturing integrated sole of midsole and outsole Experimental Example 1

A midsole and an outsole were simultaneously molded according to the manufacturing method of FIG. 1. TPU was used as a material for each of the midsole and the outsole.

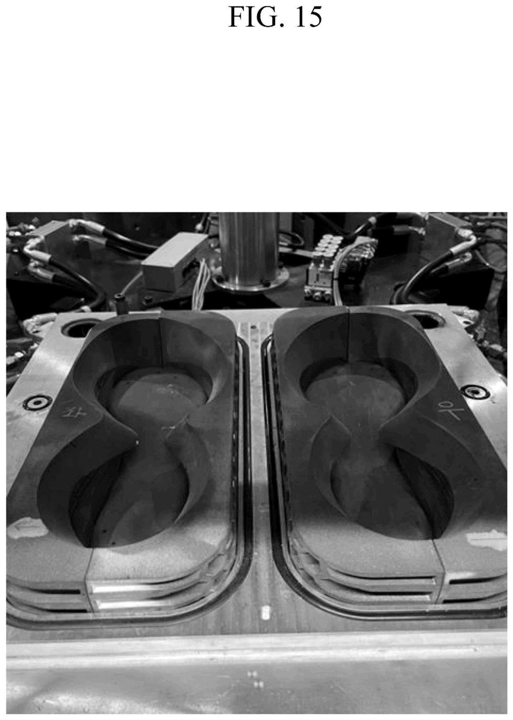

FIG. 15 shows a photograph of a mold for manufacturing a midsole according to an experimental example of the present invention. FIG. 15 has the same structure as the mold of FIG. 6.

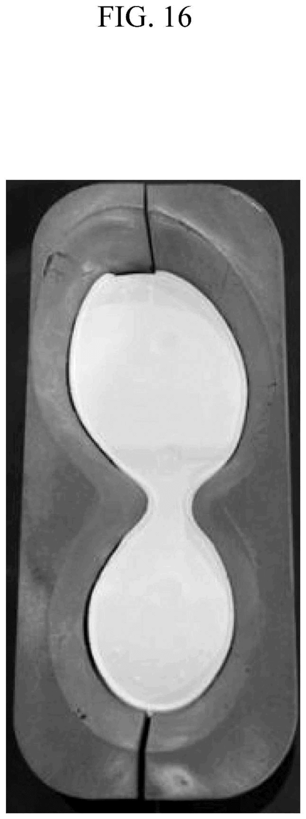

FIG. 16 shows a photograph of one of midsoles physical foam injection-molded according to an experimental example of the present invention. As shown in FIG. 16, a midsole was physical foam injection-molded into a cavity of a mold. A space for injection-molding an outsole through an extended part of the mold exists on the midsole.

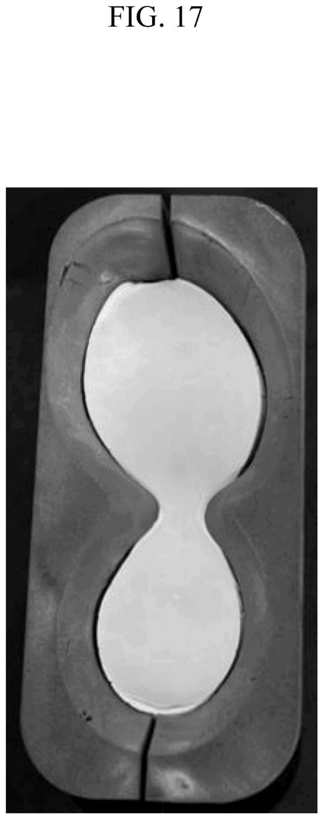

FIG. 17 shows a photograph of an integrated sole in which an outsole is injection-molded on the midsole of FIG. 16. As shown in FIG. 17, the midsole and the outsole could be manufactured by integrating them.

### Experimental Example 2

One more integrated sole was manufactured in the same manner as in Experimental Example 1. In Experimental Example 2, since the integrated sole was manufactured in the same manner as in Experimental Example 1, a detailed experimental process thereof will be omitted.

### Comparative Example 1

Contrary to the above-described Experimental Example 1 and Experimental Example 2, an outsole made of TPU was manufactured by injection molding. The manufactured outsole was inserted into a cavity of a mold. An integrated sole was manufactured by forming a midsole on the outsole through a physical foaming injection process using a mixture in which TPU as a raw material was mixed with nitrogen, which is a supercritical fluid. Since the rest of the experimental process can be easily understood by those of ordinary skill in the art, a detailed description thereof will be omitted.

### Experimental Results

For the integrated soles manufactured according to the above-described Experimental Example 1, Experimental Example 2, and Comparative Example 1, 13 points for Comparative Example 1, 16 points for Experimental Example 1, and 12 points for Experimental Example 2 were determined to measure the adhesion strength between the midsole and the outsole. In the integrated soles of Experimental Example 1, Experimental Example 2, and Comparative Example 1, each point was present at the same position. Table 1 below shows the adhesion strength measurement results.

**[Table 1]**

| Unit (kgf/cm) | Comparative Example 1 | Experimental Example 1 | Experimental Example 2 |
|---|---|---|---|
| Point 1 | 0.70 | 2.90 | 2.90 |
| Point 2 | 1.00 | 3.10 | 3.00 |
| Point 3 | 0.80 | 3.70 | 2.70 |
| Point 4 | 1.20 | 2.80 | 2.90 |
| Point 5 | 0.50 | 3.60 | 2.80 |
| Point 6 | 0.00 | 2.60 | 2.50 |
| Point 7 | 1.50 | 3.70 | 2.70 |
| Point 8 | 1.70 | 3.00 | 3.20 |
| Point 9 | 1.00 | 2.70 | 2.80 |
| Point 10 | 1.20 | 3.00 | 3.50 |
| Point 11 | 0.90 | 3.30 | 3.30 |
| Point 12 | 0.80 | 3.00 | 3.10 |
| Point 13 | 1.00 | 3.70 | - |
| Point 14 | - | 3.50 | - |
| Point 15 | - | 3.40 | - |
| Point 16 | - | 3.00 | - |
| Average | 0.94 | 3.19 | 2.95 |

As shown in Table 1, the average adhesive strength of the integrated sole of Comparative Example 1 was 0.94 kgf/cm, whereas the average adhesive strengths of the integrated soles of Experimental Example 1 and Experimental Example 2 were measured as 3.19 kgf/cm and 2.95 kgf/cm, respectively. Therefore, it was confirmed that the integrated soles manufactured according to Experimental Example 1 and Experimental Example 2 of the present invention had higher adhesive strength than the integrated sole manufactured according to Comparative Example 1.

### Experiment on manufacturing integrated sole of upper and midsole Experimental Example 3

An upper and a midsole were simultaneously molded according to the manufacturing method of FIG. 9. The upper was manufactured by weaving yarn and TPU, and PEBAX was used as a material for the midsole.

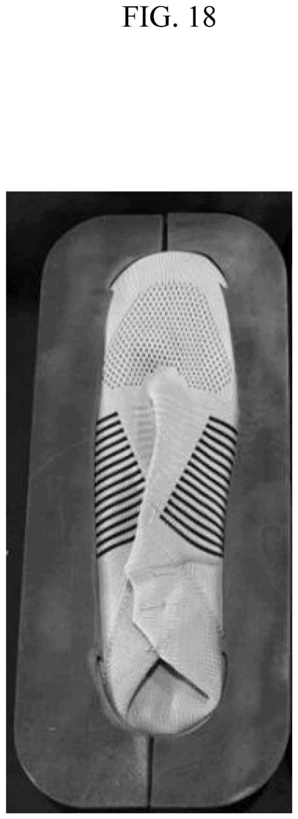

FIG. 18 shows a photograph in which the upper is coupled to a mold according to Experimental Example 3 of the present invention. The mold of FIG. 18 has the same structure as the mold of FIG. 14.

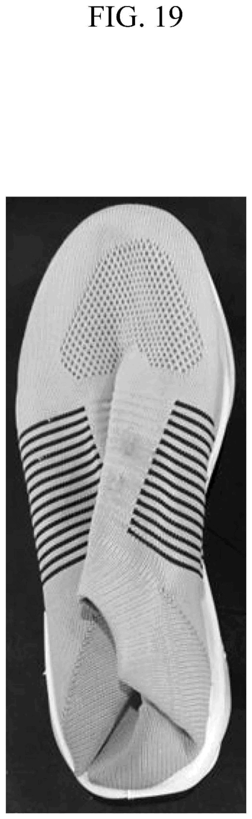

FIG. 19 shows a photograph of an integrated sole in which a midsole is physical foam injection-molded and attached to an upper according to Experimental Example 3 of the present invention. That is, the midsole was physical foam injection-molded below the upper fixed to the mold of FIG. 18. As shown in FIG. 19, the physical foam injection-molded midsole below the upper could be confirmed.

### Experimental Example 4

TPEE was used as a material for the midsole. The rest of the experimental process was the same as in Experimental Example 3 described above.

### Experimental Example 5

TPU was used as a material for the midsole. The rest of the experimental process was the same as in Experimental Example 3 described above.

### Comparative Example 2

The upper and the midsole were bonded by inserting a film between the upper bottom and the physical foam injection-molded midsole. TPU was used as a material for the midsole. TPU was used as a material for the film.

### Experimental Results

For the integrated soles manufactured according to the above-described Experimental Examples 3 to 5 and Comparative Example 2, 15 points for Comparative Example 2, 17 points for Experimental Example 3, 20 points for Experimental Example 4, and 19 points for Experimental Example 5 were determined to measure the adhesion strength between the upper and the midsole. In the integrated soles of Experimental Examples 3 to 5 and Comparative Example 2, each point was present at the same position. Table 2 below shows the adhesion strength measurement results.

**[Table 2]**

| Unit (kgf/cm) | Comparative Example 2 | Experimental Example 3 | Experimental Example 4 | Experimental Example 5 |
|---|---|---|---|---|
| Point 1 | 1.40 | 4.50 | 3.50 | 2.60 |
| Point 2 | 1.20 | 3.70 | 4.30 | 2.20 |
| Point 3 | 2.00 | 3.90 | 3.90 | 3.00 |
| Point 4 | 1.50 | 3.00 | 4.30 | 2.70 |
| Point 5 | 0.80 | 3.10 | 5.20 | 3.10 |
| Point 6 | 0.90 | 3.60 | 4.60 | 2.20 |
| Point 7 | 0.80 | 3.70 | 3.50 | 2.70 |
| Point 8 | 1.00 | 2.10 | 4.30 | 1.40 |
| Point 9 | 1.70 | 3.00 | 3.90 | 1.50 |
| Point 10 | 2.30 | 3.30 | 4.10 | 2.60 |
| Point 11 | 1.80 | 3.10 | 3.90 | 2.50 |
| Point 12 | 1.50 | 3.20 | 4.10 | 2.60 |
| Point 13 | 1.00 | 3.00 | 3.40 | 2.30 |
| Point 14 | 1.70 | 3.10 | 4.60 | 2.40 |
| Point 15 | 1.60 | 2.80 | 5.10 | 2.20 |
| Point 16 | - | 3.00 | 2.70 | 1.80 |
| Point 17 | - | - | 2.20 | 1.70 |
| Point 18 | - | - | 3.10 | 2.20 |
| Point 19 | - | - | 3.00 | 2.10 |
| Point 20 | - | - | 2.00 | - |
| Average | 1.41 | 3.26 | 3.79 | 2.31 |

As shown in Table 2, the average adhesive strength of the integrated sole of Comparative Example 2 was 1.41 kgf/cm, while the average adhesive strengths of the integrated soles of Experimental Examples 3 to 5 were measured as 3.26 kgf/cm, 3.79 kgf/cm, and 2.31 kgf/cm, respectively. Therefore, it was found that the integrated soles manufactured according to Experimental Examples 3 to 5 of the present invention had higher adhesive strength than the integrated sole manufactured according to Comparative Example 2. In addition, in Experimental Example 3 and Experimental Example 4, adhesive strengths higher than 2.7 kgf/cm, which is a general adhesive strength standard, were obtained.

Although the present invention has been described as described above, those skilled in the art to which the present invention pertains will easily understand that various modifications and variations are possible without departing from the concept and scope of the following claims.

## Claims

1. A method for manufacturing a composite injection-molded shoe, comprising:
providing a physical foam injection-molded midsole in a mold;
inserting the midsole into another mold in which an opening is formed to expose a rear surface of the midsole upward through the opening;
providing an integrated sole in which an outsole is injected through the opening and attached to the rear surface of the midsole; and
separating the integrated sole from the other mold,
wherein in the providing an integrated sole, a raw material liquid for an outsole is pressurized to form a perforation in a closed-type skin of the midsole formed in the providing a midsole to penetrate into the midsole, and penetrates into a plurality of pores surrounded by the closed-type skin and solidifies while melting the surroundings of the plurality of pores.

2. The method of claim 1, wherein in the exposing a rear surface of the midsole upward, and
wherein the other mold comprises:
a left mold part; and
a right mold part that is separable from the left mold part in a lateral direction thereof, and
wherein the left mold part and the right mold part are mutually coupled in a width direction thereof to form the opening, and
wherein a depth of the opening is greater than an average thickness of the midsole.

3. The method of claim 1, wherein in the providing a midsole, the midsole is manufactured from one or more resins selected from the group consisting of thermoplastic elastomer (TPE), thermoplastic polyurethane (TPU), thermoplastic copolyester elastomer (TPC-ET), polyether block amide (PEBA), polycarbonate (PC), and styrene-ethylene-butylene-styrene (SEBS).

4. The method of claim 3, wherein in the providing an integrated sole, the outsole is manufactured from one or more resins selected from the group consisting of TPEE (thermoplastic polyester elastomer), thermoplastic elastomer (TPE), polyether block amide (PEBA), thermoplastic polyurethane (TPU), thermoplastic vulcanizates (TPV), and ethylene-vinyl acetate (EVA).

5. The method of claim 1, wherein in the exposing a rear surface of the midsole, the rear surface is surface-treated to increase surface roughness of the rear surface.

6. The method of claim 5, wherein the surface roughness is 10 µm to 1000 µm.

7. The method of claim 1, wherein in the exposing the rear surface of the midsole, the rear surface is etched to form a plurality of protrusions on the rear surface.

8. The method of claim 1, wherein in the providing a midsole, the mold comprises an upper mold part and a lower mold part, and the upper mold part and the lower mold part are coupled to form a cavity, and
wherein the providing a midsole comprises:
providing a mixture in which a supercritical fluid is incorporated into a melt;
suctioning gas into the cavity to pressurize the cavity;
foaming the mixture in the cavity while injecting the mixture into the cavity;
depressurizing the cavity in a multi-stage after the injection of the mixture; and
separating the upper mold part and the lower mold part from each other to remove the foamed midsole,
wherein in the foaming the mixture, an intake/exhaust passage surrounding the cavity is formed in the lower mold part, and
wherein a longitudinal length of the cavity is greater than a transverse length of the cavity perpendicularly crossing the longitudinal direction, and a plurality of intake/exhaust holes are respectively formed in the intake/exhaust passage located at both ends in the longitudinal direction, and the plurality of intake/exhaust holes communicate with the cavity.

9. The method of claim 8, wherein an injection speed of the mixture in the foaming the mixture and a decompression speed of the cavity in the depressurizing the cavity in a multi-stage are substantially identical to each other.

10. The method of claim 1, wherein in the exposing a rear surface of the midsole upward through the opening, an area of the opening in contact with a lower surface of the other mold is greater than a planar area of the midsole, and
among the area of the opening, an area not shared with the planar area of the midsole surrounds the planar area of the midsole.

11. A method for manufacturing a composite injection-molded shoe, comprising:
providing an upper comprising a bottom;
fixing the upper to a mold while covering an opening formed in the mold with the bottom;
providing an integrated sole in which a midsole is physical foam injection-molded into the mold to attach the bottom to the midsole; and
removing the integrated sole from the mold,
wherein in the providing an upper, the upper comprises:
a plurality of yarn bundles; and
a plurality of polymer strings interwoven with the plurality of yarn bundles.

12. The method of claim 11, wherein the plurality of yarn bundles are arranged side by side and spaced apart from each other, and
wherein the plurality of polymer strings cross the plurality of yarn bundles and alternately pass through upper and lower parts of the plurality of yarn bundles, respectively, and
wherein an average width of the plurality of yarn bundles is greater than an average width of the plurality of polymer strings.

13. The method of claim 12, wherein the plurality of polymer strings comprise a pair of polymer strings twisted with each other, and two or more yarn bundles among the plurality of yarn bundles are positioned between the pair of polymer strings while the pair of polymer strings are respectively positioned above and below each other.

14. The method of claim 11, wherein in the providing an upper, the upper is formed by intermixing yarn and polymer through electrospinning.

15. The method of claim 11, wherein in the providing an integrated sole, the mold comprises an upper mold part and a lower mold part, and the upper mold part and the lower mold part are coupled to form a cavity, and
wherein the physical foam injection molding of the midsole into the mold comprises:
providing a mixture in which a supercritical fluid is incorporated into a melt;
suctioning gas into the cavity to pressurize the cavity;
foaming the mixture in the cavity while injecting the mixture into the cavity;
depressurizing the cavity in a multi-stage after the injection of the mixture; and
separating the upper mold part and the lower mold part from each other to remove the foamed midsole, and
wherein in the foaming the mixture, an intake/exhaust passage surrounding the cavity is formed in the lower mold part, and
wherein a longitudinal length of the cavity is greater than a transverse length of the cavity perpendicularly crossing the longitudinal direction, and a plurality of intake/exhaust holes are respectively formed in the intake/exhaust passage located at both ends in the longitudinal direction, and the plurality of intake/exhaust holes communicate with the cavity.

16. The method of claim 15, wherein an injection speed of the mixture in the foaming the mixture and a decompression speed of the cavity in the depressurizing the cavity in a multi-stage are substantially identical to each other.

17. The method of any one of claims 1 and 11, wherein in the providing the integrated sole, an injection speed of the raw material liquid for an outsole is 30mm/sec to 200mm/sec.

18. The method of any one of claims 1 and 11, wherein in the providing the integrated sole, an injection pressure of the raw material liquid for an outsole is 30MPa to 300MPa.

19. The method of any one of claims 1 and 11, wherein in the providing the integrated sole, an injection temperature of the raw material liquid for an outsole is 100°C to 250°C.

20. A composite injection-molded shoe, comprising:
an upper comprising a bottom; and
a midsole attached to the bottom, and
wherein the upper comprises:
a plurality of yarn bundles arranged side by side and spaced apart from each other; and
a plurality of polymer strings crossing the plurality of yarn bundles and interwoven with the plurality of yarn bundles while alternately passing through upper and lower parts of the plurality of yarn bundles, respectively,
wherein an average width of the plurality of yarn bundles is greater than an average width of the plurality of polymer strings, and
wherein the plurality of polymer strings comprise a pair of polymer strings twisted with each other, and two or more yarn bundles among the plurality of yarn bundles are positioned between the pair of polymer strings while the pair of polymer strings are respectively positioned above and below each other.
